# EUROPEAN PATENT APPLICATION

(11) **EP 3 413 126 A1**
(43) Date of publication of application: **12.12.2018**
(21) Application number: 16888940.0
(22) Date of filing: 11.05.2016
(51) Int. Cl.: G02F 1/1339

(54) **LIQUID CRYSTAL DISPLAY PANEL AND MANUFACTURING METHOD THEREFOR, AND DISPLAY APPARATUS**

(30) Priority: 03.02.2016 CN 201610076810
(71) Applicant: BOE Technology Group Co., Ltd., Beijing 100015 (CN)
(72) Inventor: ZHAO, Weili, Beijing 100176 (CN); HUANG, Hua, Beijing 100176 (CN)
(74) Representative: Klunker IP Patentanwälte PartG mbB
(86) International application number: PCT/CN2016/081700
(87) International publication number: WO 2017/133118

(57) **Abstract**

Provided are a liquid crystal display panel and a manufacturing method therefor. The liquid crystal display panel comprises a display region (3), a frame sealing adhesive arrangement region (2) surrounding the display region (3) and a virtual region (4) located between the display region (3) and the frame sealing adhesive arrangement region (2). A frame sealing adhesive (21) is arranged in the frame sealing adhesive arrangement region (2); and a buffering member (5) is arranged in the virtual region (4), wherein the buffering member (5) is arranged along at least one edge of the liquid crystal display panel. The elastic modulus of the buffering member (5) is less than the elastic modulus of the frame sealing adhesive (21). According to the present invention, the optical delay of an array substrate and an opposite substrate can be reduced, thereby reducing the dark state light leakage of a liquid crystal display panel.

## Description

### TECHNICAL FIELD

Embodiments of the present disclosure relate to a liquid crystal display panel, a preparation method of the liquid crystal display panel, and a display device.

### BACKGROUND

The liquid crystal display panel comprises an array substrate and an opposed substrate which are arranged opposite to each other, and a liquid crystal layer is sandwiched between the array substrate and the opposed substrate. According to a manner in which an electric field is applied to the liquid crystal display panel, the liquid crystal display panel can be divided into a vertical electric field type and a horizontal electric field type. In the liquid crystal display panel of vertical electric field type, paired electrodes apply an electric field basically in a vertical direction to liquid crystal molecules in the liquid crystal layer, and the liquid crystal layer is sandwiched between the paired electrodes. For example, the liquid crystal display panel of vertical electric field type comprises a liquid crystal display panel of Twisted Nematic (TN) type, a liquid crystal display panel of Vertical Alignment (VA) type, a liquid crystal display panel of Multi-domain Vertical Alignment (MVA) type, a liquid crystal display panel of Electrically Controlled Birefringence (ECB) type, and the like. In the liquid crystal display panel of horizontal electric field type, paired electrodes insulated from each other are all arranged on the array substrate and apply an electric field basically in a horizontal direction to the liquid crystal molecules in the liquid crystal layer. For example, the horizontal electric field type liquid crystal display panel comprises a liquid crystal display panel of In-Plane Switching (IPS) type, a liquid crystal display panel of ADvanced-Super Dimensional Switching (AD-SDS) type and the like.

It is inevitable that the liquid crystal display panel bears an action of an external force. For example, in a case that the liquid crystal display panel is assembled by using a mechanical fixing piece or in a case that the liquid crystal display panel is curved to be used for curved surface display, the liquid crystal display panel bears the action of the external force. Because of the action of the external force, the array substrate and the opposed substrate of the liquid crystal display panel generate an optical delay, so that the array substrate and the opposed substrate per se can change a polarization state of light ray incident into the liquid crystal display panel. The greater the external force borne by the liquid crystal display panel, the greater an amount of the optical delay of the array substrate and the opposed substrate, and the greater an amount of change on the polarization state of the light ray.

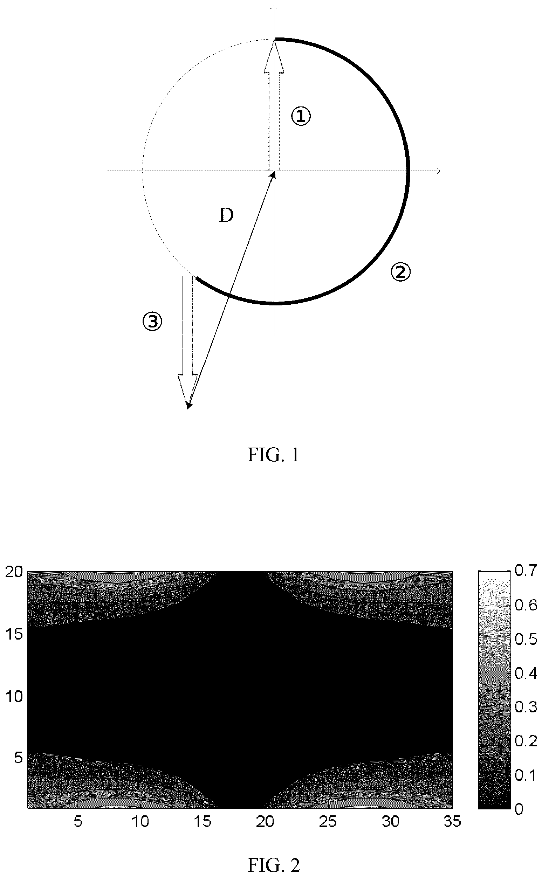

In the liquid crystal display panel of vertical electric field type, the liquid crystal molecules in the liquid crystal layer are in vertical orientation; in this case, even though the array substrate and the opposed substrate bear force to generate the optical delay, the liquid crystal display panel of vertical electric field type cannot leak light in a dark state. In the liquid crystal display panel of horizontal electric field type, the liquid crystal molecules are in horizontal orientation; in this case, when the array substrate and the opposed substrate bear force to generate the optical delay, the liquid crystal display panel of horizontal electric field type leaks light easily in the dark state. FIG. 1 is a Poincare sphere explaining light leakage of the liquid crystal display panel of horizontal electric field type under the dark state. As shown in FIG. 1, the polarization state of the light ray deflects three times during the light ray passes through the liquid crystal display panel of horizontal electric field type: (1) the light ray passes through the array substrate, the array substrate bears force to generate the optical delay, and therefore the polarization state of the light ray deflects for a first time; (2) the light ray passes through the liquid crystal layer, and liquid crystal molecules in the horizontal orientation make the polarization state of the light ray deflect for a second time; (3) the light ray passes through the opposed substrate, the opposed substrate bears force to generate the optical delay, and therefore the polarization state of the light ray deflects for a third time. After the above three times of deflection, the polarization state of the light ray is not parallel to or perpendicular to a polarization direction of a polarizer any more, thereby causing light leakage. In FIG. 1, a distance D shows a distance of a light vector of the light ray away from an original point after the above three times of deflection, and the greater the distance D, the more apparent the light leakage. FIG. 2 is a schematic view illustrating light leakage of the liquid crystal display panel of horizontal electric field type under the dark state. It can be seen from FIG. 2 that, the light leakage of the liquid crystal display panel of horizontal electric field type under the dark state indeed occurs, which seriously influences competitiveness of the liquid crystal display panel of horizontal electric field type in a display field.

### SUMMARY

According to embodiments of the disclosure, a liquid crystal display panel is provided. The liquid crystal display panel comprises a display region, a sealant arrangement region surrounding the display region, and a dummy region located between the display region and the sealant arrangement region. A sealant is arranged in the sealant arrangement region; a buffer piece is arranged in the dummy region, and the buffer piece is arranged along at least one edge of the liquid crystal display panel; and an elastic modulus of the buffer piece is less than that of the sealant.

For example, the sealant is in contact with the buffer piece.

For example, wherein, the sealant and the buffer piece are integrally formed.

For example, the sealant and the buffer piece are arranged at an interval.

For example, the sealant and the buffer piece are formed by a same material.

For example, the buffer piece is continuously arranged along the at least one edge of the liquid crystal display panel.

For example, the buffer piece includes a plurality of portions disconnected with each other along the at least one edge of the liquid crystal display panel.

For example, the buffer piece includes a first buffer piece and a second buffer piece disconnected with each other along the at least one edge of the liquid crystal display panel; and a minimum distance of the first buffer piece and/or the second buffer piece away from a center of the at least one edge meets 0≤a≤1/2L, and a minimum length of the first buffer piece and/or the second buffer piece along the at least one edge meets 1/8L≤b≤1/2L, where L is a length of the display region along the at least one edge.

For example, the buffer piece includes a plurality of buffer pieces arranged in parallel in a direction perpendicular to the at least one edge of the liquid crystal display panel.

For example, the liquid crystal display panel is a curved display panel and the buffer piece is at least arranged along a curved edge of the display panel.

For example, a long edge of the liquid crystal display panel is curved, and the buffer piece is at least arranged along the long edge of the display panel.

For example, the liquid crystal display panel is a non-curved display panel, and a long edge and a short edge of the display panel are both straight edges; and the buffer piece is at least arranged along the long edge of the liquid crystal display panel.

For example, a Young's elastic modulus of the buffer piece is less than that of the sealant.

For example, the Young's elastic modulus of the buffer piece is less than or equal to 10% of that of the sealant.

For example, the Young's elastic modulus of the buffer piece is less than or equal to 1% of that of the sealant.

For example, the liquid crystal display panel comprises an array substrate and an opposed substrate which are arranged opposite to each other; the sealant and the buffer piece are located between the array substrate and the opposed substrate.

For example, the liquid crystal display panel is a liquid crystal display panel of horizontal electric field type.

According to the embodiments of the disclosure, a preparation method of a liquid crystal display panel is provided. The liquid crystal display panel comprises a display region, a sealant arrangement region surrounding the display region, and a dummy region located between the display region and the sealant arrangement region. The method comprises: forming a sealant in the sealant arrangement region; and forming a buffer piece in the dummy region, and the buffer piece is arranged along at least one edge of the liquid crystal display panel. An elastic modulus of the buffer piece is less than that of the sealant.

For example, the preparation method of the liquid crystal display panel comprises: forming a sealant material in the sealant arrangement region and the dummy region; and performing light irradiation on the sealant material with a dual-tone mask as a mask so as to form the sealant and the buffer piece. The dual-tone mask includes a light transmissive region, a light partially-transmissive region and a light non-transmissive region, the light transmissive region of the dual-tone mask corresponds to a region where the sealant is to be formed, the light partially-transmissive region of the dual-tone mask corresponds to a region where the buffer piece is to be formed, and the light non-transmissive region of the dual-tone mask corresponds to other regions.

For example, the preparation method of the liquid crystal display panel comprises: forming a sealant material in the sealant region and the dummy region; performing a first light irradiation on a portion of the sealant material located in the region where the sealant is to be formed by adopting a one-tone mask as a mask so as to form the sealant; and performing a second light irradiation on a portion of the sealant material located in the region where the buffer piece is to be formed by adopting another one-tone mask as a mask so as to form the buffer piece. A light irradiation amount of the first light irradiation is greater than that of the second light irradiation.

For example, the liquid crystal display panel comprises an array substrate and an opposed substrate; and the forming the sealant material in the sealant arrangement region and the dummy region includes: forming the sealant material on the array substrate and/or the opposed substrate.

For example, the preparation method of the liquid crystal display panel comprises: before or after the forming the sealant, forming the buffer piece by means of attaching or extrusion molding.

According to the embodiments of the disclosure, a display device is provided. The display device comprises the liquid crystal display panel as described above.

### BRIEF DESCRIPTION OF THE DRAWINGS

In order to clearly illustrate the technical solution of the embodiments of the disclosure, the drawings of the embodiments will be briefly described in the following; it is obvious that the described drawings are only related to some embodiments of the disclosure and thus are not limitative of the disclosure.
FIG. 1 is a Poincare sphere explaining light leakage of a liquid crystal display panel of horizontal electric field type under a dark state;
FIG. 2 is a schematic view illustrating the light leakage of the liquid crystal display panel of horizontal electric field type under the dark state;
FIG. 3 is a schematic view illustrating a liquid crystal display panel according to embodiments of the present disclosure;
FIG. 4 is a sectional schematic view illustrating the liquid crystal display panel according to the embodiments of the present disclosure in an A-A direction in FIG. 3;
FIG. 5 is a schematic view illustrating decrease of dark state light leakage in the liquid crystal display panel according to the embodiments of the present disclosure;
FIG. 6 is a modification I of the liquid crystal display panel according to the embodiments of the present disclosure;
FIG. 7 is a modification II of the liquid crystal display panel according to the embodiments of the present disclosure;
FIG. 8 is a modification III of the liquid crystal display panel according to the embodiments of the present disclosure;
FIG. 9 is a modification IV of the liquid crystal display panel according to the embodiments of the present disclosure;
FIG. 10 is a flow view illustrating a preparation method of the liquid crystal display panel according to the embodiments of the present disclosure; and
FIG. 11 is a flow view illustrating another preparation method of the liquid crystal display panel according to the embodiments of the present disclosure.

### DETAILED DESCRIPTION

In order to make objects, technical details and advantages of the embodiments of the disclosure apparent, the technical solutions of the embodiment will be described in a clearly and fully understandable way in connection with the drawings related to the embodiments of the disclosure. It is obvious that the described embodiments are just a part but not all of the embodiments of the disclosure. Based on the described embodiments herein, those skilled in the art can obtain other embodiment(s), without any inventive work, which should be within the scope of the disclosure.

Unless otherwise defined, the technical terms or scientific terms here should be of general meaning as understood by those ordinarily skilled in the art. In the descriptions and claims of the present disclosure, expressions such as "first", "second" and the like do not denote any order, quantity, or importance, but rather are used for distinguishing different components. Expressions such as "include" or "comprise" and the like denote that elements or objects appearing before the words of "include" or "comprise" cover the elements or the objects enumerated after the words of "include" or "comprise" or equivalents thereof, not exclusive of other elements or objects. Expressions such as "connect" or "interconnect" and the like are not limited to physical or mechanical connections, but may include electrical connections, whether direct or indirect. Expressions such as "up", "down", "left", "right" and the like are only used for expressing relative positional relationship, the relative positional relationship may be correspondingly changed in the case that the absolute position of a described object is changed.

In a horizontal electric field type liquid crystal display panel, the liquid crystal molecules are in horizontal orientation; in this case, when an array substrate and an opposed substrate of the liquid crystal display panel bear force to generate an optical delay, dark state light leakage happens to the liquid crystal display panel of horizontal electric field type easily. Inventors of the present disclosure find that, an elastic modulus of a sealant of the liquid crystal display panel of horizontal electric field type has a very great influence on the dark state light leakage. The greater the elastic modulus of the sealant is, the greater the optical delay amount of the array substrate and the opposed substrate is, the more obvious the dark state light leakage is; the smaller the elastic modulus of the sealant is, the smaller the optical delay amount of the array substrate and the opposed substrate is, the smaller the dark state light leakage is. Further, the inventors of the present disclosure find that, considering other performances of the sealant, such as a sealing performance and stability, the elastic modulus of the sealant cannot be blindly decreased in order to decrease the dark state light leakage, that is to say, a decreasing degree of the elastic modulus of the sealant is very limited.

Based on the above discovery, embodiments of the present disclosure provide a liquid crystal display panel and a preparation method thereof, a buffer piece is arranged on at least one edge of the liquid crystal display panel, and an elastic modulus of the buffer piece is less than that of a sealant, and therefore an optical delay of an array substrate and an opposed substrate is lowered while an elastic modulus of the sealant is not lowered, so that a dark state light leakage of the liquid crystal display panel is decreased. Thus, not only quality of the sealant is guaranteed, but also the dark state light leakage is decreased.

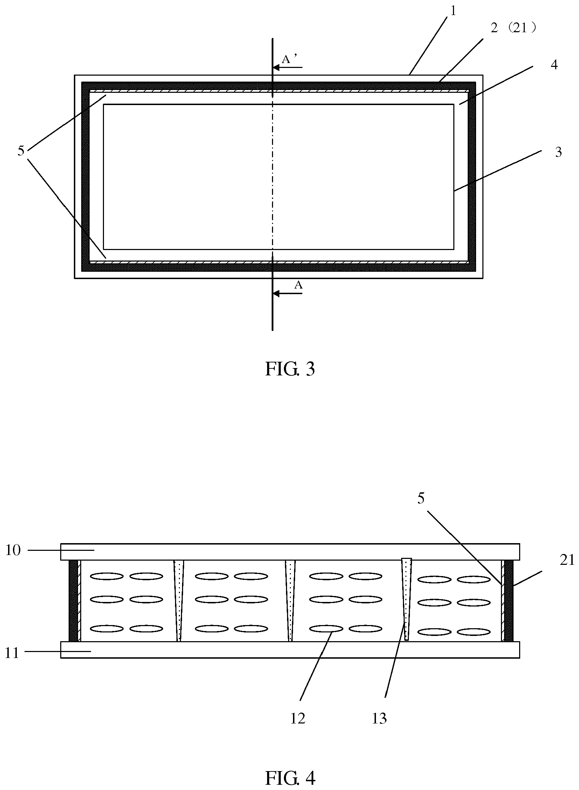

According to the embodiments of the present disclosure, a liquid crystal display panel is provided. FIG. 3 is a schematic view illustrating the liquid crystal display panel according to the embodiments of the present disclosure. As shown in FIG. 3, the liquid crystal display panel 1 comprises a display region 3, a sealant arrangement region 2 surrounding the display region 3, and a dummy region 4 located between the display region 3 and the sealant arrangement region 2. A sealant 21 is arranged in the sealant arrangement region 2; a buffer piece 5 is arranged in the dummy region 4, and the buffer piece 5 is arranged along at least one edge of the liquid crystal display panel 1; and an elastic modulus of the buffer piece 5 is less than that of the sealant 21.

FIG. 4 is a sectional schematic view illustrating the liquid crystal display panel according to the embodiments of the present disclosure in an A-A direction in FIG. 3. For example, as shown in FIG. 4, the liquid crystal display panel according to the embodiments of the present disclosure comprises an array substrate 11 and an opposed substrate 10 which are arranged opposite to each other, and a liquid crystal layer 12 arranged between the array substrate 11 and the opposed substrate 10; the sealant 21 and the buffer piece 5 are located between the array substrate 11 and the opposed substrate 10; the sealant 21 seals the liquid crystal layer 12 between the array substrate 11 and the opposed substrate 10. For example, as shown in FIG. 4, the liquid crystal display panel according to the embodiments of the present disclosure further comprises a spacer 13 located between the array substrate 11 and the opposed substrate 10, and configured for maintaining a gap between the array substrate 11 and the opposed substrate 10. For example, as shown in FIG. 4, the liquid crystal display panel according to the embodiments of the present disclosure is the liquid crystal display panel of horizontal electric field type, and liquid crystal molecules in the liquid crystal layer 12 are basically in horizontal orientation.

In the liquid crystal display panel according to the embodiments of the present disclosure, in a case that the liquid crystal display panel bears an external force to make the array substrate 11 and the opposed substrate 10 generate an optical delay, because the elastic modulus of the buffer piece 5 arranged along at least one edge of the liquid crystal display panel is less than that of the sealant 21, the buffer piece 5 decreases the optical delay amount of the array substrate 11 and the opposed substrate 10. Because the optical delay amount of the array substrate 11 and the opposed substrate 10 is decreased, an amount of change of the array substrate 11 and the opposed substrate 10 on a polarization state of light ray is decreased, and therefore the polarization state of the light ray is closely perpendicular to or parallel to a polarization direction of a polarizer and the dark state light leakage of the liquid crystal display panel is decreased and even is avoided.

What needs to be explained is that, the elastic modulus is Young's elastic modulus, elastic modulus of shearing or elastic modulus of volume. Because the Young's elastic modulus, the elastic modulus of shearing and the elastic modulus of volume are in a direct proportion relationship to each other, as an example, the embodiments of the present disclosure use the Young's elastic modulus to represent the elastic modulus. For example, the Young's elastic modulus of the buffer piece 5 is less than that of the sealant 21.

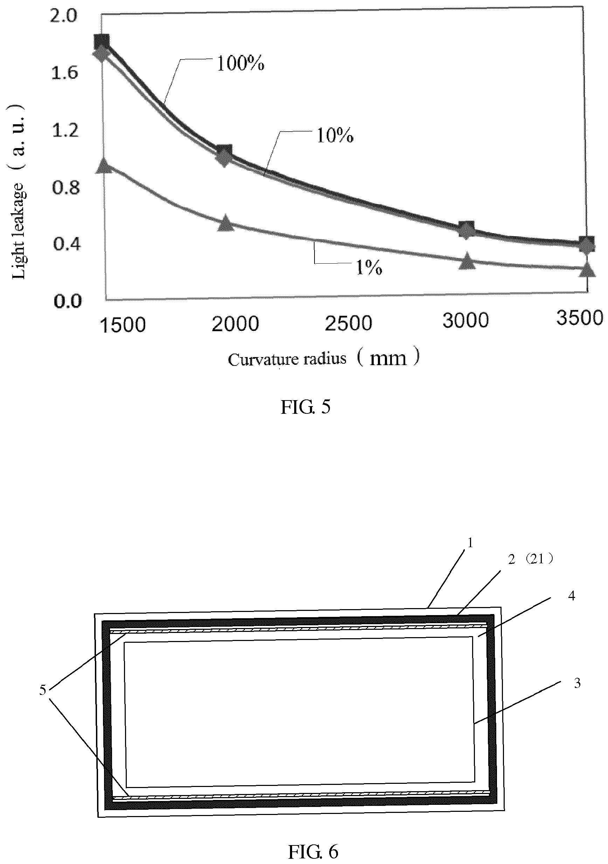

FIG. 5 is a schematic view illustrating decrease of the dark state light leakage in the liquid crystal display panel according to the embodiments of the present disclosure. For example, the Young's elastic modulus of the sealant 21 is 1-4 Gpa and is typically 1.6 Gpa. In FIG. 5, the dark state light leakage under three following conditions is measured: the Young's elastic modulus of the buffer piece 5 is equal to that of the sealant 21; the Young's elastic modulus of the buffer piece 5 is equal to 10% of that of the sealant 21; and the Young's elastic modulus of the buffer piece 5 is equal to 1% of that of the sealant 21. It can be seen from FIG. 5 that, in the case that the Young's elastic modulus of the buffer piece 5 is less than that of the sealant 21, the dark state light leakage is decreased; and the less the Young's elastic modulus of the buffer piece 5 is, the more obvious an effect of decreasing the dark state light leakage is. For example, the Young's elastic modulus of the buffer piece 5 is less than or equal to 10% of that of the sealant 21. For example, the Young's elastic modulus of the buffer piece 5 is less than or equal to 1% of that of the sealant 21.

As shown in FIG. 3, the dummy region 4 is located between the display region 3 and the sealant arrangement region 2, and therefore the buffer piece 5 is located between the display region 3 and the sealant 21; in other words, the buffer piece 5 is located on a side of the sealant 21 facing the display region 3. The inventors of the present disclosure find that, if the buffer piece 5 is located on a side of the sealant 21 facing away from the display region 3, the buffer piece 5 basically cannot lower the optical delay of the array substrate 11 and the opposed substrate 10, and therefore basically cannot decrease the dark state light leakage.

For example, the display region 3 is a region displaying images, and a plurality of pixel units (not shown) are arranged in matrix in the display region 3.

For example, as shown in FIG. 3, the sealant 21 is located in the whole sealant arrangement region 2, that is to say, a width of the sealant 21 is equal to that of the sealant arrangement region 2. However, the embodiments of the present disclosure are not limited thereto, and the width of the sealant 21 may be less than that of the sealant arrangement region 2.

For example, as shown in FIG. 3 and FIG. 4, the sealant 21 and the buffer piece 5 are in contact with each other. However, the embodiments of the present disclosure are not limited thereto, the sealant 21 and the buffer piece 21 may be arranged at an interval (namely, a gap is arranged between the sealant 21 and the buffer piece 5), as shown in FIG. 6. The less a distance between the buffer piece 5 and the sealant 21 is, the more obvious the effect of the buffer piece 5 decreasing the optical delay amount of the array substrate 11 and the opposed substrate is, and therefore the more obvious the effect of decreasing the dark state light leakage is.

For example, in the case that the sealant 21 and the buffer piece 5 are in contact with each other, the sealant 21 and the buffer piece 5 are integrally formed so as to simplify a manufacturing process. For example, "the sealant 21 and the buffer piece 5 are integrally formed" refers to that the sealant 21 and the buffer piece 5 are formed by a same material at the same time. In the case that the sealant 21 and the buffer piece 5 are integrally formed, the elastic modulus of the buffer piece 5 is made to be less than that of the sealant 21 by controlling a curing degree of the sealant 21 and a curing degree of the buffer piece 5.

For example, the buffer piece 5 is a flexible film, a rubber piece or other structures with certain flexibility. For example, a material forming the buffer piece 5 is a high polymer material with a good water-resist and oxygen-resist performance and good stability, such as polyethylene terephthalate (PET), polyimide (PI), polyethylene naphthalate (PEN) and the like. For example, the buffer piece 5 is formed by a material different from or same as a material of the sealant 21. In the case that the buffer piece 5 and the sealant 5 are formed by a same material, kinds of materials needed for preparing the liquid crystal display panel is decreased. In a case that the buffer piece 5 and the sealant 5 are formed by the same material, the elastic modulus of the buffer piece 5 is made to be less than that of the sealant 21 by controlling the curing degree of the sealant 21 and the curing degree of the buffer piece 5.

For example, the buffer piece 5 is formed before or after the sealant 21 is formed. For example, the buffer piece 5 is formed by means of attaching or extrusion molding.

For example, as shown in FIG. 3, the buffer piece 5 is continuously arranged along at least one edge of the liquid crystal display panel; in this case, the buffer piece 5 well lowers the optical delay amount of the array substrate 11 and the opposed substrate 10 and therefore well decreases the dark state light leakage. However, the embodiments of the present disclosure are not limited thereto, and the buffer piece 5 for example includes a plurality of portions disconnected with each other along at least one edge of the liquid crystal display panel; in this case, process difficulty of preparing the buffer piece 5 is lowered. For example, the plurality of portions disconnected with each other have a same length or different lengths; the plurality of portions disconnected with each other are arranged at a same interval or different intervals. For exmample, the plurality of portions disconnected with each other have the same length and are arranged at the same interval.

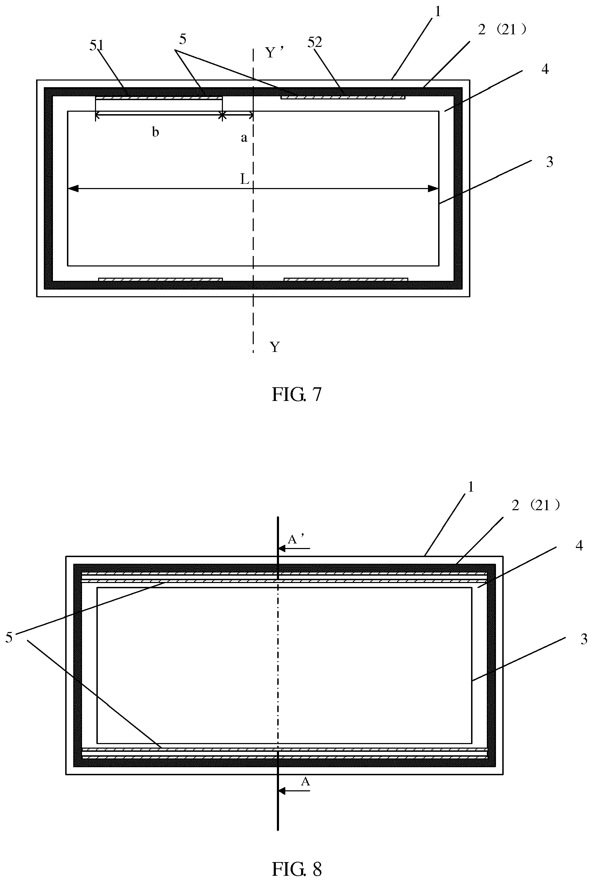

For example, as shown in FIG. 7, the buffer piece 5 includes a first buffer piece 51 and a second buffer piece 52 disconnected with each other along at least one edge of the liquid crystal display panel 1. In order to guarantee that the effect of decreasing the dark state light leak is achieved, for example, a minimum distance a of the first buffer piece 51 and/or the second buffer piece 52 away from a center of the at least one edge of the liquid crystal display panel meets 0≤a≤1/2L, and a length b of the first buffer piece 51 and/or the second buffer piece 52 along the at least one edge of the liquid crystal display panel meets 1/8L≤b≤1/2 L, where, L is a length of the display region 1 along the at least one edge

For example, as shown in FIG. 3, along at least one edge of the liquid crystal display panel, only one buffer piece 5 is arranged in a direction perpendicular to the at least one edge. However, the embodiments of the present disclosure are not limited herein; for example, along at least one edge of the liquid crystal display panel, a plurality of buffer pieces 5 parallel to each other are arranged in the direction perpendicular to the at least one edge, as shown in FIG. 8; in this case, the optical delay amount of the array substrate 11 and the opposed substrate 10 is better lowered, and therefore the dark state light leakage is better decreased.

For example, as shown in FIG. 3, the buffer piece 5 is arranged along two long edges of the liquid crystal display panel. However, the embodiments of the present disclosure are not limited herein, and the buffer piece 5 for example is arranged only along one long edge of the liquid crystal display panel.

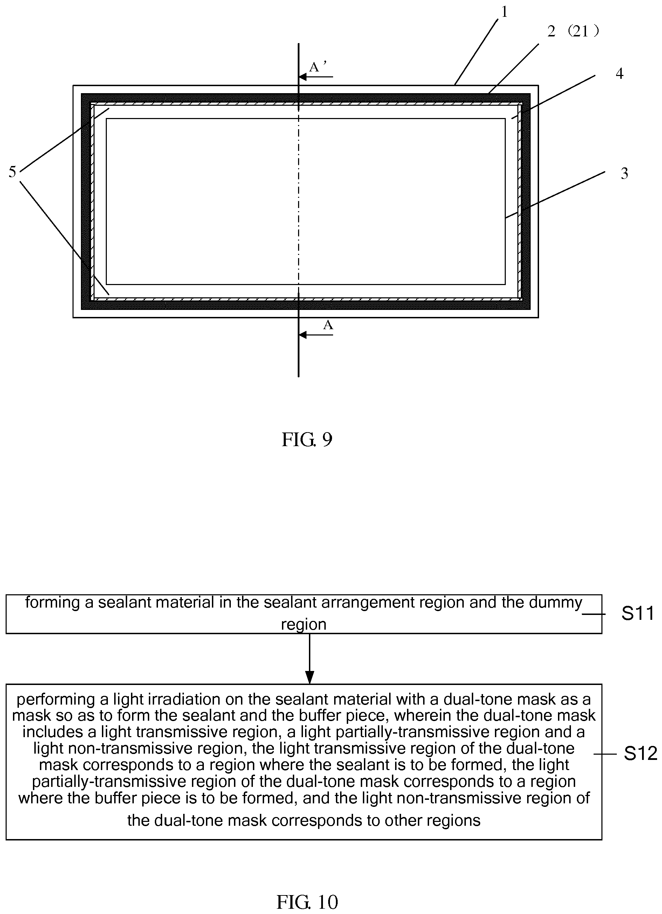

For example, as shown in FIG. 3, the buffer piece 5 is arranged along two long edges of the liquid crystal display panel. However, the embodiments of the present disclosure are not limited thereto, and the buffer piece 5 for example is arranged along a short edge of the liquid crystal display panel, as shown in FIG. 9. An arrangement manner of the buffer piece 5 arranged along the short edge of the liquid crystal display panel refers to an arrangement manner of the buffer piece 5 arranged along the long edge. For example, the buffer piece 5 arranged along the short edge is in contact with the sealant 21 or the buffer piece 5 arranged along the short edge and the sealant 21 are arranged at an interval. For example, in a case that the buffer piece 5 arranged along the short edge is in contact with the sealant 21, the buffer piece 5 arranged along the short edge and the sealant 21 are integrally formed. For example, the buffer piece 5 arranged along the short edge and the sealant 21 are formed by a same material or different materials. For example, the buffer piece 5 arranged along the short edge is continuously arranged along the short edge or includes a plurality of portions disconnected with each other. For example, the buffer piece 5 arranged along the short edge includes a third buffer piece and a fourth buffer piece disconnected with each other, a minimum distance a' of the third buffer piece and/or the fourth buffer piece away from a center of the short edge meets 0≤a'≤1/2 L', and a minimum length b' of the third buffer piece and/or the fourth buffer piece along the short edge meets 1/8 L'≤b'≤1/2 L', where L' is a length of the display region 3 along the short edge. For example, along one short edge of the liquid crystal display panel, the buffer piece 5 includes a plurality of buffer pieces parallel to each other in a direction perpendicular to the short edge.

For example, as shown in FIG. 9, the buffer piece 5 is arranged both along the long edge of the liquid crystal display panel and the short edge of the liquid crystal display panel so as to be a closed ring; however, the embodiments of the present disclosure are not limited thereto, and the buffer piece 5 for example is arranged only along the short edge of the liquid crystal display panel. For example, as shown in FIG. 9, the buffer piece 5 is arranged along two short edges of the liquid crystal display panel; however, the embodiments of the present disclosure are not limited thereto, and the buffer piece 5 for example is arranged only along one short edge of the liquid crystal display panel.

What needs to be explained is that, the more edges the buffer piece 5 is arranged along, the better the effect of lowering the optical delay amount of the array substrate 11 and the opposed substrate 10 and decreasing the dark state light leakage is.

For example, the liquid crystal display panel according to the embodiments of the present disclosure is a curved display panel so as to be used for curved surface display. In this case, for example, the buffer piece 5 is arranged at least along a curved edge of the liquid crystal display panel so as to better lower the optical delay amount of the array substrate 11 and the opposed substrate 10, which therefore better decreases the dark state light leakage.

For example, the long edge of the liquid crystal display panel according to the embodiments of the present disclosure is curved, and the buffer piece 5 is arranged at least along the long edge of the liquid crystal display panel.

For example, the liquid crystal display panel according to the embodiments of the present disclosure is a non-curved display panel, and therefore the long edge and the short edge of the display panel are both straight edges. In this case, the buffer piece 5 is arranged at least along the long edge of the liquid crystal display panel.

What needs to be explained is that, the embodiments of the present disclosure do not describe a whole structure of the liquid crystal display panel. In order to achieve essential functions of the liquid crystal display panel, those skilled in the art can arrange other structures which are not shown according to a specific application scene, which is not limited by the embodiments of the present disclosure.

The embodiments of the present disclosure further provide a preparation method of a liquid crystal display panel. The liquid crystal display panel 1 comprises a display region 3, a sealant arrangement region 2 surrounding the display region 3, and a dummy region 4 located between the display region 3 and the sealant arrangement region 2. The method comprises: forming a sealant 21 in the sealant arrangement region 2; and forming a buffer piece 5 in the dummy region 4, and the buffer piece 5 being arranged along at least one edge of the liquid crystal display panel 1. An elastic modulus of the buffer piece 5 is less than that of the sealant 21.

A structure of the liquid crystal display panel prepared by the above method and advantageous technical effects brought by the above method can refer to the above mentioned liquid crystal display panel according to the embodiments of the present disclosure, which are not repeated herein.

For example, as shown in FIG. 10, the preparation method of the liquid crystal display panel according to the embodiments of the present disclosure comprises steps of:
S11: forming a sealant material in the sealant arrangement region 2 and the dummy region 4;
S12: performing a light irradiation on the sealant material with a dual-tone mask as a mask so as to form the sealant 21 and the buffer piece 5.

For example, the dual-tone mask includes a light transmissive region, a light partially-transmissive region and a light non-transmissive region, the light transmissive region of the dual-tone mask corresponds to a region where the sealant is to be formed, the light partially-transmissive region of the dual-tone mask corresponds to a region where the buffer piece is to be formed, and the light non-transmissive region of the dual-tone mask corresponds to other regions. Because the light transmissive region of the dual-tone mask corresponds to the region where the sealant is to be formed and the light partially-transmissive region of the dual-tone mask corresponds to the region where the buffer piece is to be formed, a light irradiation amount borne by a portion of the sealant material located in the region where the sealant is to be formed is greater than a light irradiation amount borne by a portion of the sealant material located in the region where the buffer piece is to be formed, and in this way, the elastic modulus of the buffer piece is made to be less than that of the sealant.

For example, the dual-tone mask is a slit mask or a half-tone mask.

For example, the liquid crystal display panel comprises an array substrate and an opposed substrate, and the sealant material is formed on the array substrate and/or the opposed substrate.

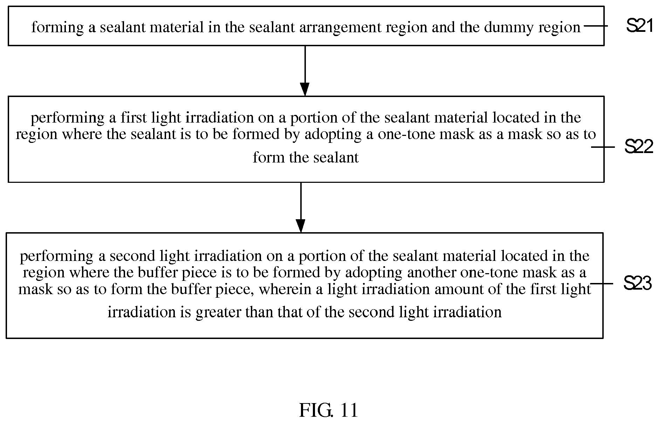

For example, as shown in FIG. 11, the preparation method of the liquid crystal display panel according to the embodiments of the present disclosure comprises steps of:
S21: forming a sealant material in the sealant arrangement region 2 and the dummy region 4;
S22: performing a first light irradiation on a portion of the sealant material located in the region where the sealant is to be formed by adopting a one-tone mask as a mask so as to form the sealant 21;
S23: performing a second light irradiation on a portion of the sealant material located in the region where the buffer piece is to be formed by adopting another one-tone mask as a mask so as to form the buffer piece 5, wherein, a light irradiation amount of the first light irradiation is greater than that of the second light irradiation.

For example, the liquid crystal display panel comprises an array substrate and an opposed substrate, and the sealant material is formed on the array substrate and/or the opposed substrate.

What needs to be explained is that, in the above steps of S11 and S12 and the above steps from S21 to S23, the buffer piece and the sealant are both formed by the sealant material. However, the embodiments of the present disclosure are not limited thereto, and the buffer piece and the sealant for example are formed by different materials; in this case, it for example is that the sealant material is formed in the sealant arrangement region 2 and a buffer piece material is formed in the dummy region 4, and then the sealant material and the buffer piece material are cured so as to form the sealant 21 and the buffer piece 5.

For example, the preparation method of the liquid crystal display panel according to the embodiments of the present disclosure comprises: before or after the forming the sealant, forming the buffer pieces by means of attaching or extrusion molding.

The embodiments of the present disclosure further provide a display device, and the display device comprises a liquid crystal display panel as mentioned above. For example, the display device is a liquid crystal display panel, a liquid crystal display device, a mobile phone, a tablet personal computer, a TV set, a display, a notebook computer, a digital photo frame, a navigator or any other product or component with a display function.

The foregoing embodiments merely are exemplary embodiments of the disclosure, and not intended to define the scope of the disclosure, and the scope of the disclosure is determined by the appended claims.

The present application claims priority of Chinese Patent Application No. 201610076810.4 filed on February 3, 2016, the disclosure of which is incorporated herein by reference in its entirety as part of the present application.

## Claims

1. A liquid crystal display panel, comprising a display region, a sealant arrangement region surrounding the display region, and a dummy region located between the display region and the sealant arrangement region, wherein,
a sealant is arranged in the sealant arrangement region;
a buffer piece is arranged in the dummy region, and the buffer piece is arranged along at least one edge of the liquid crystal display panel; and
an elastic modulus of the buffer piece is less than that of the sealant.

2. The liquid crystal display panel according to claim 1, wherein, the sealant is in contact with the buffer piece.

3. The liquid crystal display panel according to claim 2, wherein, the sealant and the buffer piece are integrally formed.

4. The liquid crystal display panel according to claim 1, wherein, the sealant and the buffer piece are arranged at an interval.

5. The liquid crystal display panel according to any one of claims 1 to 4, wherein,
the sealant and the buffer piece are formed by a same material.

6. The liquid crystal display panel according to any one of claims 1 to 4, wherein,
the buffer piece is continuously arranged along the at least one edge of the liquid crystal display panel.

7. The liquid crystal display panel according to any one of claims 1 to 4, wherein, the buffer piece includes a plurality of portions disconnected with each other along the at least one edge of the liquid crystal display panel.

8. The liquid crystal display panel according to claim 7, wherein,
the buffer piece includes a first buffer piece and a second buffer piece disconnected with each other along the at least one edge of the liquid crystal display panel; and
a minimum distance of the first buffer piece and/or the second buffer piece away from a center of the at least one edge meets 0≤a≤1/2 L, and a minimum length of the first buffer piece and/or the second buffer piece along the at least one edge meets 1/8L≤b≤1/2 L, where L is a length of the display region along the at least one edge.

9. The liquid crystal display panel according to any one of claims 1 to 4, wherein, the buffer piece includes a plurality of buffer pieces arranged in parallel in a direction perpendicular to the at least one edge of the liquid crystal display panel.

10. The liquid crystal display panel according to any one of claims 1 to 4, wherein, the liquid crystal display panel is a curved display panel and the buffer piece is at least arranged along a curved edge of the display panel.

11. The liquid crystal display panel according to claim 10, wherein, a long edge of the liquid crystal display panel is curved, and the buffer piece is at least arranged along the long edge of the display panel.

12. The liquid crystal display panel according to any one of claims 1 to 4, wherein,
the liquid crystal display panel is a non-curved display panel, and a long edge and a short edge of the display panel are both straight edges; and
the buffer piece is at least arranged along the long edge of the liquid crystal display panel.

13. The liquid crystal display panel according to any one of claims 1 to 4, wherein, a Young's elastic modulus of the buffer piece is less than that of the sealant.

14. The liquid crystal display panel according to claim 13, wherein, the Young's elastic modulus of the buffer piece is less than or equal to 10% of that of the sealant.

15. The liquid crystal display panel according to claim 14, wherein, the Young's elastic modulus of the buffer piece is less than or equal to 1% of that of the sealant.

16. The liquid crystal display panel according to any one of claims 1 to 4, wherein,
the liquid crystal display panel comprises an array substrate and an opposed substrate which are arranged opposite to each other;
the sealant and the buffer piece are located between the array substrate and the opposed substrate.

17. The liquid crystal display panel according to any one of claims 1 to 4, wherein, the liquid crystal display panel is a liquid crystal display panel of horizontal electric field type.

18. A preparation method of a liquid crystal display panel, the liquid crystal display panel comprising a display region, a sealant arrangement region surrounding the display region, and a dummy region located between the display region and the sealant arrangement region,
wherein, the method comprises:
forming a sealant in the sealant arrangement region; and
forming a buffer piece in the dummy region, and the buffer piece is arranged along at least one edge of the liquid crystal display panel, and
wherein, an elastic modulus of the buffer piece is less than that of the sealant.

19. The preparation method of the liquid crystal display panel according to claim 18, comprising:
forming a sealant material in the sealant arrangement region and the dummy region; and
performing a light irradiation on the sealant material with a dual-tone mask as a mask so as to form the sealant and the buffer piece,
wherein, the dual-tone mask includes a light transmissive region, a light partially-transmissive region and a light non-transmissive region, the light transmissive region of the dual-tone mask corresponds to a region where the sealant is to be formed, the light partially-transmissive region of the dual-tone mask corresponds to a region where the buffer piece is to be formed, and the light non-transmissive region of the dual-tone mask corresponds to other regions.

20. The preparation method of the liquid crystal display panel according to claim 18, comprising:
forming a sealant material in the sealant arrangement region and the dummy region;
performing a first light irradiation on a portion of the sealant material located in the region where the sealant is to be formed by adopting a one-tone mask as a mask so as to form the sealant; and
performing a second light irradiation on a portion of the sealant material located in the region where the buffer piece is to be formed by adopting another one-tone mask as a mask so as to form the buffer piece,
wherein, a light irradiation amount of the first light irradiation is greater than that of the second light irradiation.

21. The preparation method of the liquid crystal display panel according to claim 19 or 20, wherein,
the liquid crystal display panel comprises an array substrate and an opposed substrate; and
the forming the sealant material in the sealant arrangement region and the dummy region includes: forming the sealant material on the array substrate and/or the opposed substrate.

22. The preparation method of the liquid crystal display panel according to claim 18, comprising: before or after the forming the sealant, forming the buffer piece by means of attaching or extrusion molding.

23. A display device, comprising the liquid crystal display panel according to any one of claims 1 to 17.
